# EUROPÄISCHE PATENTSCHRIFT

(11) **EP 2 473 404 B1**
(45) Veröffentlichungstag und Bekanntmachung des Hinweises auf die Patenterteilung: **05.04.2017**
(21) Anmeldenummer: 10750068.8
(22) Anmeldetag: 02.09.2010
(51) Int. Cl.: B64C 21/02, B64C 21/08

(54) **STRÖMUNGSKÖRPER, STELLKLAPPE ODER HAUPTFLÜGEL ODER FLOSSE EINES FLUGZEUGS SOWIE STRUKTURBAUTEIL MIT EINEM SOLCHEN STRÖMUNGSKÖRPER**
FLOW BODY, HIGH-LIFT FLAP OR MAIN WING OR FIN OF AN AIRCRAFT, AS WELL AS A STRUCTURE COMPONENT HAVING SUCH A FLOW BODY
ÉLÉMENT AÉRODYNAMIQUE, CLAPET DE RÉGLAGE, AILE PRINCIPALE OU AILERON D'UN AÉRONEF, AINSI QU'ÉLÉMENT DE STRUCTURE MUNI D'UN TEL ÉLÉMENT AÉRODYNAMIQUE

(30) Priorität: 02.09.2009 DE 102009039769; 02.09.2009 US 239221 P
(43) Veröffentlichungstag der Anmeldung: 11.07.2012
(73) Patentinhaber: Airbus Operations GmbH, 21129 Hamburg (DE)
(72) Erfinder: RIST, Ulrich, 70565 Stuttgart (DE); KNOLL, Andreas, 22307 Hamburg (DE)
(74) Vertreter: Bird & Bird LLP
(86) Internationale Anmeldenummer: PCT/EP2010/005390
(87) Internationale Veröffentlichungsnummer: WO 2011/026622

(56) Entgegenhaltungen:
- GB-A- 1 332 026
- US-A- 3 467 348
- US-A- 5 255 881
- US-A- 5 894 990
- US-A1- 2006 273 197

## Beschreibung

Die Erfindung betrifft einen Strömungskörper, eine Stellklappe oder einen Hauptflügel oder eine Flosse eines Flugzeugs sowie ein Strukturbauteil mit einem solchen Strömungskörper.

Aus dem Stand der Technik sind Strömungskörper, insbesondere als Flugzeugleitwerke oder Flugzeugflügel bekannt, auf deren Oberfläche Wirbelgeneratoren angeordnet sind. Bei diesen Wirbelgeneratoren handelt es sich um kleine, zu einer Anströmungsrichtung schräg stehende Bleche, die auf einer Flügeloberseite oder am Rumpfheck des Flugzeuges angeordnet sind.

Derartige Wirbelgeneratoren weißen jedoch den Nachteil auf, dass die Wirbel permanent, unabhängig vom Flugzustand, erzeugt werden, auch wenn diese gerade nicht benötigt werden. Daraus resultiert ein unnötiger Widerstand, der mit einem erhöhten Treibstoffverbrauch einhergeht.

Darüber hinaus sind auch Wirbelgeneratoren bekannt, bei denen Druckluft, aus einem Speicher über Leitungen zu Öffnungen in der Oberfläche des Strömungskörpers geleitet wird. Bei Bedarf von Wirbeln werden Ventile so angesteuert, dass Pressluft aus den Öffnungen in die den Strömungskörper umfließende Hauptströmung austreten kann. Während Pressluft ausströmt, wird die Hauptströmung dabei durch die zweite Strömung überlagert, so dass sich Wirbel ergeben.

Diese Wirbelerzeugungsvorrichtungen bedingen jedoch den Einbau zusätzlicher, struktureller Bauteile in dem Strömungskörper, was zu einer Erhöhung des Gesamtgewichts führt und sich damit auch in einem erhöhten Kraftstoffverbrauch niederschlägt. Hohe Kraftstoffverbräuche sind im zeitgenössischen Flugzeugbau unerwünscht, da sie abgesehen von der erhöhten Umweltbelastung zu einer reduzierten Reichweite oder reduzierten Nutzlast der Flugzeuge führen.

Die US 5,255,881 A beschreibt einen Flügel mit schlitzförmigen Durchlässen in der Flügeloberfläche. Die Durchlässe sind über eine zwischengeschaltete Trockenkammer mit einem Drucktank verbunden. Luft wird aus den Durchlässen tangential zur Strömungsoberfläche ausgestoßen, um künstliche Verwirbelungen zu erzeugen, deren Sog zu einem zusätzlichen Auftrieb am Flugzeug führt.

Aufgabe der Erfindung ist es, einen Strömungskörper bereitzustellen, mit dem die Umströmung desselben in gezielter und effizienter Weise derart beeinflusst werden kann, dass Ablösungseffekte der Strömung am Strömungskörper in geringerem Maße auftreten.

Aufgabe der Erfindung ist es weiterhin, eine Stellklappe oder einen Hauptflügel oder eine Flosse eines Flugzeugs sowie ein Strukturbauteil mit einem solchen Strömungskörper bereit zu stellen.

Diese Aufgaben werden mit den Merkmalen der jeweiligen unabhängigen Patentansprüche gelöst. Weitere Ausführungsformen sind in den auf diese jeweils rückbezogenen Unteransprüchen angegeben.

Erfindungsgemäß ist ein Strömungskörper mit einer Strömungskörper-Oberfläche vorgesehen, die eine zur Umströmung durch ein Fluid vorgesehene Strömungskonturfläche ausbildet. Die eine Strömungskörper-Oberfläche kann sich insbesondere zwischen einer Vorderkante und einer zu dieser in Strömungskörper-Tiefenrichtung beabstandeten Hinterkante erstrecken. Der Strömungskörper weist weiterhin zumindest eine Strömungsbeeinflussungs-Vorrichtung zur Beeinflussung der Strömung des die Strömungsoberfläche umströmenden Fluids auf. Die Strömungsbeeinflussungs-Vorrichtung weist jeweils auf:
einen entlang der Strömungskörper-Dickenrichtung verlaufenden Durchlass zur Verbindung des die Strömungsoberfläche umströmenden Fluids mit einem im Strömungskörper angeordneten Aktuatorraum einer Einsaug- und Ausblasvorrichtung,
ein in der Strömungskörper-Tiefenrichtung gesehen neben dem Durchlass angeordneter und sich entlang der Strömungskörper-Spannweitenrichtung erstreckender und insbesondere wannenförmig gestalteter Vertiefungsabschnitt , wobei der Vertiefungsabschnitt an einem Strömungsbeeinflussungsbereich innerhalb der flächigen Erstreckung der Strömungskonturfläche der Strömungsoberfläche ausgebildet ist, so dass eine Begrenzungswand mit dem Vertiefungsabschnitt eine Vertiefung bildet, wobei die Begrenzungswand in der Strömungskörper-Spannweitenrichtung gesehen und in Bezug auf den Durchlass dem Vertiefungsabschnitt gegenüber liegt.

Die Begrenzungswand kann insbesondere als Verlängerung eines Wandbereichs des Durchlasses ausgebildet sein.

Die Einsaug- und Ausblasvorrichtung ist derart ausgeführt, dass diese ein periodisch einander abwechselndes Ein- und Ausblasen von Fluid durch den Durchlass bewirkt und dadurch in der Strömung des die Strömungsoberfläche umströmenden Fluids einen Drall erzeugen kann, dessen Rotationsachse entlang der angenommenen Hauptströmungsrichtung Strömungskörper-Tiefenrichtung gerichtet ist.
Durch diesen Drall wird dem den Strömungskörper umströmenden Fluid Energie zugeführt, die zusammen mit dem Drall dazu führen kann, dass die Strömung in Strömungsrichtung gesehen hinter der jeweiligen Anordnung aus jeweils einem Durchlass und einer Vertiefung eine stabilere Grenzschicht hat. Dadurch kann insbesondere erreicht werden, dass in Strömungszuständen, in denen an bestimmten Stellen der Strömungsoberfläche eine Neigung zur Strömungsablösung aufgrund eines Druckanstiegs in der Strömungsrichtung vorhanden ist, durch Anordnung zumindest einer Anordnung aus jeweils einem Durchlass und einer Vertiefung in diesem Bereich der Strömungsoberfläche die Strömungsablösung verhindert oder in einen hinteren Bereich der Strömungsoberfläche geschoben werden kann.

Damit können auf besonders einfache Weise Ablösungserscheinungen der Strömung verzögert werden, wobei der Lärm, der durch Zerstören großer kohärenter Wirbelstrukturen erzeugt wird, ebenfalls reduziert wird.

In der Ansaugphase wird das von der Umströmung der Strömungsoberfläche kommende Fluid in die Vertiefung gelenkt und von der Begrenzungswand in den Durchlass umgelenkt. Die von der Strömungskonturfläche auf der an der Begrenzungswand liegenden Seite kommende Sekundärströmung kann sich dabei oberhalb der Vertiefung auflösen oder nach außen mitgerissen werden. In der Abfolge mehrerer Zyklen von Einsaugphasen und Ausblasphasen addieren sich die Strömungen zu einem in der Tiefenrichtung oder Hauptströmungsrichtung gesehen
asymmetrischen Strömungszustand und somit einem Drall oberhalb der Vertiefung, der wegen der zyklischen Abfolge stabil ist.

Nach einem erfindungsgemäßen Ausführungsbeispiel des Strömungskörpers kann dieser im Übergangsbereich zwischen der Begrenzungswand und der Strömungskonturfläche eine Kantenlinie aufweisen. Die Kantenlinie wirkt dabei als Abreißkante, so dass das Vorliegen des in der Tiefenrichtung oder Hauptströmungsrichtung gesehen asymmetrischen Strömungszustands auf vorteilhafte Weise durch eine entsprechende Gestaltung des Randbereichs oder Eckbereichs unterstützt werden kann. Die in der Strömungskörper-Tiefenrichtung gesehenen Konturlinien der jeweils aneinander liegenden Begrenzungswand und Strömungskonturfläche können dabei im Bereich der Kantenlinie mit einem Winkel von 90 Grad oder von weniger als 90 Grad, also in einem spitzen Winkel einander zulaufen. Die Kantenlinie kann dabei als Ecke oder mit einem verhältnismäßig geringen Radius der Konturlinie an dieser Stelle ausgebildet sein.

Bei einem erfindungsgemäßen Ausführungsbeispiel des Strömungskörpers kann der Vertiefungsabschnitt der Strömungsoberfläche einen Oberflächenabschnitt aufweisen, der in der Strömungskörper-Spannweitenrichtung gesehen winklig zu der neben der Vertiefung gelegenen Strömungskonturfläche verläuft, so dass der Oberflächenabschnitt von der Strömungskonturfläche aus gesehen von dieser zur Einmündung des Durchlasses hin rampenförmig abfällt, d.h. in Strömungskörper-Tiefenrichtung und in Strömungskörper-Spannweitenrichtung verläuft.

Nach einem weiteren Ausführungsbeispiel des erfindungsgemäßen Strömungskörpers kann auf dessen Strömungskörper-Oberfläche eine Mehrzahl von Anordnungen aus jeweils einem Durchlass und einer Vertiefung angeordnet sein, von denen zumindest mehrere dieser Anordnungen mit einem Aktuatorraum einer Einsaug- und Ausblasvorrichtung in Strömungsaustausch stehen.

Bei einem weiteren Ausführungsbeispiel des erfindungsgemäßen Strömungskörpers können die Anordnungen aus jeweils einem Durchlass und einer Vertiefung in der Strömungskörper-Tiefenrichtung gesehen hintereinander und voneinander beabstandet angeordnet sein, wobei die Kombinationen einer Vertiefung und eines Durchlasses in der Strömungskörper-Spannweitenrichtung gesehen in dergleichen Orientierung angeordnet sind.

Alternativ oder zusätzlich können bei dem erfindungsgemäßen Strömungskörper die Anordnungen aus jeweils einem Durchlass und einer Vertiefung in der Strömungskörper-Spannweitenrichtung gesehen nebeneinander und voneinander beabstandet angeordnet sind, wobei die Kombinationen einer Vertiefung und eines Durchlasses in der Strömungskörper-Tiefenrichtung gesehen jeweils abwechselnd in zueinander entgegen gesetzter Orientierung angeordnet sind.

Die Einsaug- und Ausblasvorrichtung kann aus einem den Aktuatorraum derselben zumindest teilweise umgrenzenden Membran-Aktuator gebildet sein, der derart ausgeführt ist, dass durch entsprechende Betätigung des Membran-Aktuators das Volumen des Aktuatorraums vergrößert und verkleinert werden kann, wobei durch die Verkleinerung des Aktuatorraum-Volumens Fluid durch den Durchlass ausgeblasen und durch die Vergrößerung des Aktuatorraum-Volumens Fluid durch den Durchlass eingesaugt wird. Der Membran-Aktuator kann dabei insbesondere elektrisch ansteuerbar sein und als Lautsprecher- oder Piezo-Aktuator gebildet sein. Dieser kann eine Begrenzungsschale mit einem Öffnungsbereich aufweisen, der von einer Membran abgedeckt wird, wobei die Membran derart angesteuert werden kann, dass sich diese in Bezug auf den von der Begrenzungsschale und der Membran umgrenzten Aktuator-Innenraum zur Verkleinerung von dessen Volumen nach innen bewegt und zur Vergrößerung von dessen Volumen nach außen bewegt.

Alternativ dazu kann die Einsaug- und Ausblasvorrichtung eine Strömungserzeugungs-Vorrichtung aufweisen, die derart in Wirkverbindung mit dem Aktuatorraum der Einsaug- und Ausblasvorrichtung steht, dass bei einer entsprechenden Betätigung der Strömungserzeugungs-Vorrichtung periodisch abwechselnd Fluid durch den Durchlass ausgeblasen und durch den Durchlass eingesaugt wird. Die Strömungserzeugungs-Vorrichtung kann dabei eine Kreiskolbenpumpe und/oder eine intermittierend arbeitende Kolbenpumpe aufweisen oder durch diese gebildet sein.

Nach einem weiteren Aspekt der Erfindung ist eine Stellklappe oder Hauptflügel oder Flosse eines Flugzeugs vorgesehen, die als Strömungskörper nach einer efindungsgemäßen Ausführungsform gebildet ist. Dabei kann vorgesehen sein, dass eine Mehrzahl von Anordnungen aus jeweils einem Durchlass und einer Vertiefung in der Strömungskörper-Tiefenrichtung gesehen in der hinteren Hälfte der Strömungsoberfläche angeordnet sind.

Nach einem weiteren Aspekt der Erfindung ist ein Strukturbauteil für ein Flugzeug, ein bodengebundenes Fahrzeug oder ein Wasserfahrzeug mit einem als Strömungskörper ausgebildeten Strukturbauteil vorgesehen, das als Strömungskörper nach einer erfindungsgemäßen Ausführungsform gebildet ist.

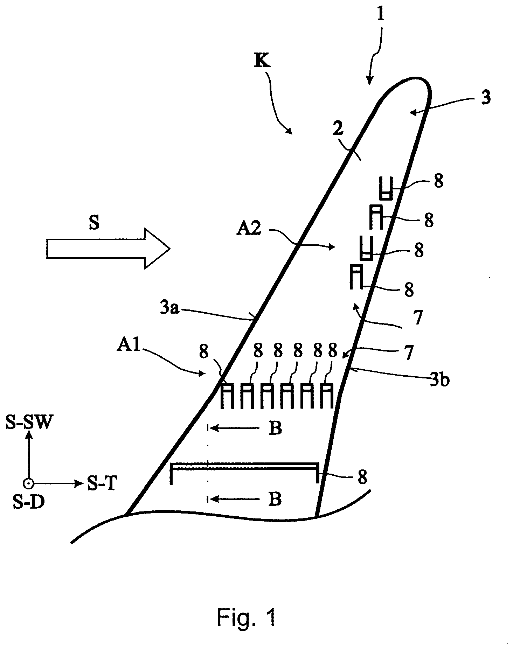

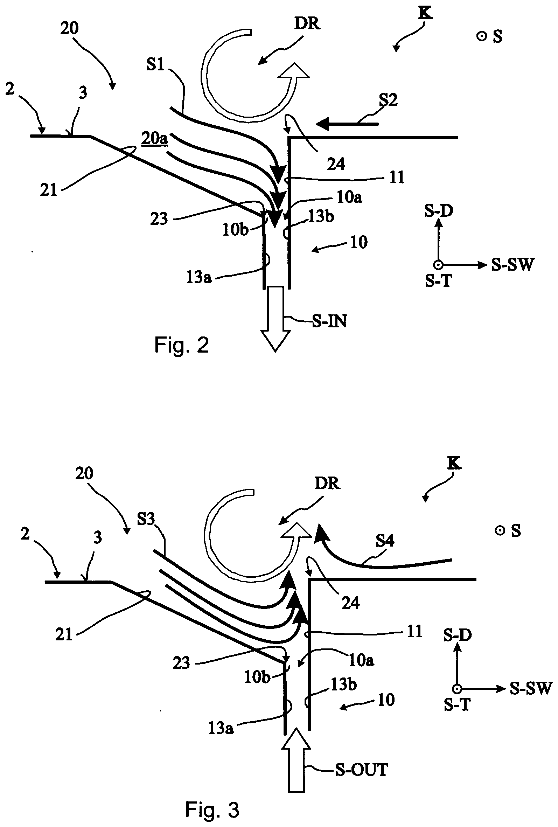

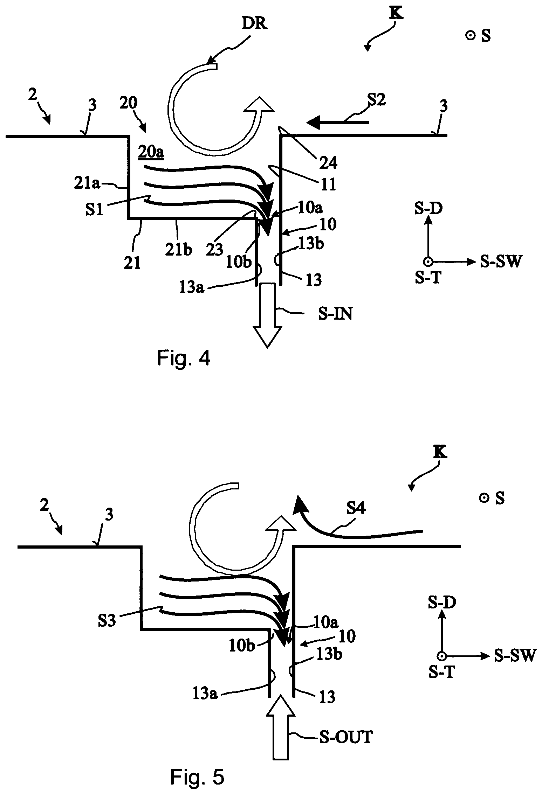

Im Folgenden werden Ausführungsbeispiele der Erfindung an Hand der beigefügten, schematischen Figuren beschrieben, die zeigen:
▪ Figur 1 eine Draufsicht auf einen erfindungsgemäßen Strömungskörper in Form eines Tragflügels eines Flugzeugs, der eine Mehrzahl von erfindungsgemäßen Wirbelgeneratoren mit jeweils einem Ausführungsbeispiel einer Anordnung aus jeweils einem Durchlass und einer Vertiefung aufweist,
▪ Figur 2 eine Teilschnittansicht einer erfindungsgemäßen Ausführungsbeispiel vorgesehenen Anordnung aus jeweils einem Durchlass und einer Vertiefung entlang der Schnittlinie B-B aus der Figur 1 in einer Ansaugphase, bei der Luft vom Bereich der Strömungsoberfläche in den Durchlass einströmt,
▪ Figur 3 die Teilschnittansicht des Ausführungsbeispiel der Anordnung aus jeweils einem Durchlass und einer Vertiefung gemäß der Figur 2 in einer Ausblasphase, bei der Luft aus dem Durchlass in den Bereich der Strömungsoberfläche ausströmt,
▪ Figur 4 eine Teilschnittansicht eines gegenüber der in den Figuren 2 und 3 gezeigten Ausführungsform weiteren Ausführungsbeispiels der erfindungsgemäß vorgesehenen Anordnung aus jeweils einem Durchlass und einer Vertiefung in einem Zustand, bei dem Fluid vom Bereich der Strömungsoberfläche in den Durchlass einströmt,
▪ Figur 5 die in der Figur 4 gezeigte Ausführungsform der Anordnung aus jeweils einem Durchlass und einer Vertiefung in einem Zustand, bei dem Fluid aus dem Durchlass in den Bereich der Strömungsoberfläche ausströmt.

Der erfindungsgemäße Strömungskörper 1 weist eine Strömungskörper-Oberfläche 2 auf, die eine zur Umströmung durch ein Fluid vorgesehene Strömungskonturfläche 3 ausbildet. Nach der Erfindung wird unter Strömungskörper ein von einem Fluid, d.h. z.B. von Gas oder Flüssigkeit, umströmter Körper verstanden, der seine Hauptfunktion aufgrund der Umströmung durch das Fluid erhält. Beispielsweise kann der Strömungskörper ein Hauptflügel, eine Stellklappe, eine Flosse, also eine Höhen- oder Seitenleitwerks-Flosse, ein Zusatzflügel wie ein Vorflügel oder ein Canard oder auch ein Rumpfteil sein. Nach einem weiteren Beispiel kann der Strömungskörper ein Strukturteil eines bodengebundenen Fahrzeugs wie z.B. ein Spoiler desselben sein. Beispielsweise kann der Strömungskörper ein Teil eines Schiffsrumpfs oder ein Ruder eines Schiffes sein. Generell kann bei derartigen Strömungskörpern das Problem auftreten, dass sich - je nach Anwendungsfall und Einsatzgebiet - eine unerwünschte Neigung zur Ablösung der Strömung einstellt. Mit einem Strömungskörper nach der Erfindung ist es möglich, auf effiziente Weise die Strömung derart zu beeinflussen, dass die Umströmung des Strömungskörpers stabilisiert und/oder die Neigung zur Ablösung der Strömung lokal oder über einen weiteren Bereich des Strömungskörpers verringert werden kann.

Unter Strömungskonturfläche wird derjenige Bereich der Strömungskörper-Oberfläche 2 verstanden, der aufgrund der Umströmung durch ein Fluid die bestimmungsgemäß vorgesehene Hauptfunktion, im Falle des Flügels die Auftriebserzeugung, erfüllt.

Die Figur 1 zeigt eine Draufsicht auf einen Strömungskörper 1 in Form eines Tragflügels eines Flugzeugs. Zur Orientierung und weiteren Beschreibung ist in den Figuren ein auf den Strömungskörper bezogenes Koordinatensystem mit einer Strömungskörper-Spannweitenrichtung S-SW, einer Strömungskörper-Tiefenrichtung T-SW und einer Strömungskörper-Dickenrichtung S-D eingetragen.

Der Strömungskörper 1 weist eine in dem gezeigten Ausführungsbeispiel sich zwischen einer Vorderkante 3a und einer zu dieser in Strömungskörper-Tiefenrichtung S-T beabstandeten Hinterkante 3b erstreckenden Strömungskörper-Oberfläche 2 auf, die eine zur Umströmung durch ein Fluid vorgesehene Strömungskonturfläche 3 ausbildet. Weiterhin weist der Strömungskörper 1 zumindest eine Strömungsbeeinflussungs-Vorrichtung 7 zur Beeinflussung der Strömung des die Strömungsoberfläche 2 umströmenden Fluids auf. Die Strömungsbeeinflussungs-Vorrichtung 7 ist aus einer Anordnung 8 aus jeweils einem Durchlass 10 und einer Vertiefung 20 gebildet. Weiterhin ist der Strömungsbeeinflussungs-Vorrichtung 7 eine Einsaug- und Ausblasvorrichtung (in den Figuren nicht dargestellt) zugeordnet oder weist die Strömungsbeeinflussungs-Vorrichtung 7 eine Einsaug- und Ausblasvorrichtung auf.

Der Flugzeugflügel wird in einer Hauptströmungsrichtung S mit einem Fluid, in diesem Fall von Luft, umströmt, wobei die Hauptströmungsrichtung S der den aerodynamischen Körper anströmenden Luft entlang der Flügel-Tiefenrichtung, also generell der Strömungskörper-Tiefenrichtung S-T verläuft. Die Hauptströmungsrichtung S kann generell auch winklig zur Strömungskörper-Tiefenrichtung S-T gerichtet sein.

Bei einer Anwendung des erfindungsgemäßen Strömungskörpers z.B. auf Schiffskörper ist das den Strömungskörper umströmende Fluid Wasser. Die erfindungsgemäße Lösung kann auf diesen Anwendungsfall ohne weiteres analog angewendet werden.

In der Figur 1 sind mehrere Anordnungen 8 aus jeweils einem Durchlass 10 und einer Vertiefung 20 dargestellt, die auf der Oberfläche des Flügels 1 angeordnet sind. Beispielartig ist in der Figur 1 in einem Bereich der Strömungsoberfläche 2 des Strömungskörpers 1 bzw. des Flügels eine Abfolge A1 von sechs Anordnungen 8 aus jeweils einem Durchlass 10 und einer Vertiefung 20 gezeigt, die in der Strömungskörper-Tiefenrichtung S-T hintereinander angeordnet sind. Durch eine solche Abfolge A1 von Anordnungen 8 in der Strömungskörper-Tiefenrichtung S-T kann die Strömung in einem größeren sich in der Strömungskörper-Tiefenrichtung S-T erstreckenden Bereich erfindungsgemäß beeinflusst werden. Im inneren Bereich des in der Figur 1 dargestellten Flügels 1 ist eine einzelne Anordnung 8 aus jeweils einem Durchlass 10 und einer Vertiefung 20 dargestellt, die sich länglich über einen Großteil der Oberseite der Strömungsoberfläche 2 erstreckt. Auch mit dieser Ausführungsform einer Anordnung 8 kann die Strömung in einem größeren sich in der Strömungskörper-Tiefenrichtung S-T erstreckenden Bereich erfindungsgemäß beeinflusst werden. Auch kann durch eine Reihe A2 von Anordnungen 8, die - wie im äußeren Bereich des in der Figur 1 dargestellten Flügels 1 gezeigt ist - in der Strömungskörper-Spannweitenrichtung S-SW gesehen hintereinander und dabei auch versetzt zueinander angeordnet sind, die Strömung in einem größeren sich in der Strömungskörper-Spannweitenrichtung S-SW erstreckenden Bereich erfindungsgemäß beeinflusst werden.

Die Anordnungen 8 aus jeweils einem Durchlass 10 und einer Vertiefung 20 können in der Strömungskörper-Tiefenrichtung S-T hintereinander und voneinander beabstandet angeordnet sein (Abfolge A1), wobei die Kombinationen jeweils einer Vertiefung 20 und eines Durchlasses 10 in der Strömungskörper-Tiefenrichtung S-T gesehen in dergleichen Orientierung angeordnet sind, d.h. die Vertiefungen 20 der Abfolge A1 in der Tiefenrichtung S-T gesehen an derselben Seite der Anordnung von Vertiefung und Durchlass gelegen sind.

Alternativ oder zusätzlich kann an dem Strömungskörper K vorgesehen sein, dass die zumindest zwei Anordnungen 8 in der Strömungskörper-Spannweitenrichtung S-SW nebeneinander und voneinander beabstandet angeordnet sind, wobei jeweils zwei benachbarte Anordnungen von jeweils einer Kombination einer Vertiefung 20 und eines Durchlasses 10 in der Strömungskörper-Tiefenrichtung S-SW gesehen zueinander entgegen gesetzten Orientierungen aufweisen, wobei also die Vertiefungen in der Spannweitenrichtung S-SW gesehen an zueinander entgegen gesetzten Seiten gelegen sind, wie dies mit der in der Figur 1 dargestellten Anordnung A2 gezeigt ist. Bei dieser Konstellation von gegensinnig zueinander gelegenen Anordnungen jeweils einer Vertiefung 20 und eines Durchlasses 10 entstehen an jeweils einander benachbarten Anordnungen 8 Wirbel, die in entgegengesetzter Drehrichtung drehen. Diese jeweils benachbarten Wirbel greifen sozusagen ineinander und begünstigen sich gegenseitig. Sie können sich dadurch stabilisieren und halten sich dadurch länger als in einer Konstellation, in der sich diese Wirbel nicht beeinflussen würden. Eine solche Reihe A2 von zueinander gegensinnig gelegenen Anordnungen einer Vertiefung 20 und eines Durchlasses 10 kann somit an Stellen des Strömungskörpers K vorgesehen sein, bei denen das möglichst stabile Halten dieser Wirbel vorgesehen ist.

Alternativ dazu kann an dem Strömungskörper K vorgesehen sein, dass die zumindest zwei Anordnungen 8 in der Strömungskörper-Spannweitenrichtung S-SW nebeneinander und voneinander beabstandet angeordnet sind, wobei die Kombination einer Vertiefung 20 und eines Durchlasses 10 in der Strömungskörper- Tiefenrichtung S-SW gesehen in der gleichen Orientierung angeordnet sind, wobei die Vertiefungen in der Spannweitenrichtung S-SW gesehen an derselben Seite der Anordnung auf Vertiefung und Durchlass gelegen sind. Bei dieser Konstellation von gleichsinnig zueinander gelegenen Anordnungen jeweils einer Vertiefung 20 und eines Durchlasses 10 entstehen Reibungsverluste bei den nebeneinander liegenden und sich gegenseitig beeinflussenden, gleichsinnig drehenden Wirbeln, so dass diese Wirbel zeitlich weniger stabil sind und sich schneller auflösen als bei dem zuvor beschriebenen Ausführungsbeispiel. Eine solche Reihe von zueinander gleichsinnig gelegenen Anordnungen einer Vertiefung 20 und eines Durchlasses 10 können somit an Stellen des Strömungskörpers K vorgesehen sein, bei denen nur verhältnismäßig kurzzeitig Wirbel auf der Oberfläche desselben gebildet werden sollen, die sich also - wegen ihrer gleichsinnigen Umdrehungsrichtung bei ihrer gegenseitigen Beeinflussung - relativ schnell auflösen. Diese Mehrzahl von gleichsinnig zueinander gelegenen Anordnungen 8 kann insbesondere auch zur Lärmbekämpfung verwendet werden und in diesem Fall vorteilhaft an Stellen des Strömungskörpers angeordnet sein, an denen aufgrund der dort lokal auftretenden Strömung Lärm erzeugt wird.

Die Figuren 2 und 3 zeigen als Teil der erfindungsgemäß vorgesehenen Strömungsbeeinflussungs-Vorrichtung 7 zur Beeinflussung der Strömung des die Strömungsoberfläche 2 umströmenden Fluids ein Ausführungsbeispiel einer erfindungsgemäßen Anordnung 8 aus jeweils einem Durchlass 10 und einer Vertiefung 20, die in der Strömungskörper-Spannweitenrichtung S-SW neben dem Durchlass gebildet ist. Ein Aktuatorraum oder ein Innenraum einer Einsaug- und Ausblasvorrichtung ist strömungstechnisch an den Durchlass 10 angekoppelt, so dass durch die Einsaug- und Ausblasvorrichtung der Strömungszustand in der Vertiefung 20 und in dem Gebiet oberhalb derselben beeinflusst werden kann. Der Durchlass 10 verläuft entlang der Strömungskörper-Dickenrichtung S-D, also von der Vertiefung 20 aus gesehen in den Strömungskörper 1 hinein.

Die Vertiefung 20 erstreckt sich entlang der Strömungskörper-Spannweitenrichtung S-SW und ist durch einen Vertiefungsabschnitt 21 der Strömungsoberfläche 2 an einem Strömungsbeeinflussungsbereich innerhalb der Strömungskonturfläche 3 der Strömungsoberfläche 2 ausgebildet. Somit ist die Strömungskonturfläche 3 um den Vertiefungsabschnitt 21 herum gelegen. Die Vertiefung 20, die im Wesentlichen wannenförmig ausgebildet ist, ist somit in der Strömungskörper-Tiefenrichtung S-T gesehen neben dem Durchlass 10 oder in der Strömungskörper-Spannweitenrichtung S-SW hinter oder vor dem Durchlass 10 angeordnet.

Die Vertiefung 20 ist durch einen Vertiefungsabschnitt 21 gebildet, der in der Ausführungsform nach den Figuren 2 und 3 in der Strömungskörper-Spannweitenrichtung S-SW gesehen winklig zu der neben der Vertiefung 20 gelegenen Strömungskonturfläche 3 verläuft, so dass der Oberflächenabschnitt 21 von der Strömungskonturfläche 2a aus gesehen von dieser zur Einmündung 10a des Durchlasses 10 hin rampenförmig abfällt. In der Ausführungsform nach den Figuren 4 und 5, in denen dargestellte Teile gleicher Funktion mit denselben Bezugszeichen wie in der Darstellung der Figuren 2 und 3 versehen sind, ist die Vertiefung 20 durch einen Vertiefungsabschnitt 21 gebildet, der eine Seitenwand 21 a und einen Bodenbereich 21 b aufweist. Die Seitenwand 21 a hat in der Strömungskörper-Tiefenrichtung S-T gesehen die Form einer Stufenflanke, da die Konturlinie der Seitenwand 21 a in einem relativ großen Winkel, der z.B. zwischen 50 Grad und 90 Grad gelegen ist, zu der Konturlinie der Strömungskonturfläche 3 verläuft.

Seitlich des Bodenbereichs 21 b ist der Durchlass 10 angeordnet. In Bezug auf die Lage des Durchlasses 10 ist eine Begrenzungswand 11 ausgebildet, deren sich in der Blickrichtung der Strömungskörper-Tiefenrichtung S-T ergebende Konturlinie insgesamt in einem relativ großen Winkel, der z.B. zwischen 50 Grad und 90 Grad zu der Konturlinie der Strömungskonturfläche 3 verläuft. Die Begrenzungswand 11 erstreckt sich von der Einmündung 10a bis zum Randbereich 24.

Neben dem Bodenbereich 21 b ist somit die Einmündung 10a des Durchlasses 10 gelegen, die eine Öffnung 10b der Vertiefung 20 ausbildet. Die sich in der Blickrichtung der Strömungskörper-Tiefenrichtung S-T ergebende Konturlinie der Vertiefung 20 weist einen an der Stelle der Einmündung 10a gelegenen ersten Randbereich 23 auf, der den Übergang von dem Bodenbereich 21 b zum Durchlass 10 bildet. Ebenso weist die sich in der Blickrichtung der Strömungskörper-Tiefenrichtung S-T ergebende Konturlinie der Vertiefung 20 einen zweiten Randbereich 24 auf, der den Übergang von der Begrenzungswand 11 zu der Strömungskonturfläche 3 bildet, den die Vertiefung hinsichtlich der Umströmung der Strömungskonturfläche 3 unterbricht. Der erste Randbereich 23 ist in der Strömungskörper-Spannweitenrichtung S-SW gesehen unterhalb, also in Bezug auf die Lage der Strömungskonturfläche 3 weiter im Inneren des Strömungskörpers 1 gelegen als der zweite Randbereich 24, so dass sich die Begrenzungswand 11 zwischen der Einmündung 10a und der Strömungskonturfläche 3 erstreckt und somit eine Seitenwand, nämlich die an der Einmündung 10 gelegene Seitenwand der Vertiefung 20 bildet. Die Begrenzungswand 11 kann somit insbesondere auch als eine Verlängerung eines Wandbereichs des Durchlasses 10 ausgebildet sein. Der zweite Randbereich 24 oder der Übergangsbereich zwischen der Begrenzungswand 11 und der Strömungskonturfläche 3 kann insbesondere mit einer Konturlinie mit relativ geringem Krümmungsradius oder auch als Ecke ausgebildet sein, also eine Kantenlinie aufweisen (Figuren 2, 3 und 4, 5). Bei der Ausbildung des Strömungskörpers als Klappe oder Flügel kann der Krümmungsradius insbesondere kleiner als 10 mm vorgesehen sein.

Die Konturlinie der Begrenzungswand 11 kann abschnittsweise oder insgesamt geradlinig verlaufen, wie dies in den Figuren 2 und 3 sowie 4 und 5 dargestellt ist. Auch kann der Verlauf der Konturlinie der Begrenzungswand 11 gekrümmt verlaufen und sich dabei z.B. von der Stelle, an der die Öffnung 10b gelegen ist, von der Vertiefung 20 weg, also nach außen verlaufen. Genauso ist es möglich, dass die Begrenzungswand 11 in Richtung der Vertiefung 20 gekrümmt ist.

Der Durchlass 10 mündet in die Aktuatorkammer, in der eine Strömungserzeugungs-Vorrichtung angeordnet ist, mit der Fluid aus dem Bereich der Vertiefung 20 und auch aus dem darüber liegenden Bereich in die Kammer angesaugt und mit dem Fluid in dazu entgegen gesetzter Richtung durch den Durchlass 10 aus der Kammer ausgeblasen werden kann, wenn das Strömungserzeugungsmittel entsprechend angesteuert wird.

In Figur 2 ist der Zustand während der Ansaugphase gezeigt. In dieser Phase wird mit dem Strömungserzeugungsmittel Fluid, das den Strömungskörper 1 in der Hauptströmungsrichtung S umströmt, abgesaugt und von der Kammer aufgenommen. Dabei wird im Bereich der Vertiefung ein Sog erzeugt, der mit den Pfeilen S1 symbolisch dargestellt ist. Dieser Sog hat zur Folge, dass eine größere Menge Fluid aus dem Vertiefungsbereich 20a über den ersten Randbereich 23 und eine geringere Menge Fluid von der Strömungskonturfläche 3 über den zweiten Randbereich 24 angesaugt wird. Mit anderen Worten wird in einer Ansaugphase mehr Fluid von der tiefer liegenden Wandung 23 im Vertiefungsbereich 20a angesaugt als von der Wandung 24. Durch diese Asymmetrie in der Fluidquantität wird ein Drall DR in dem in Hauptströmungsrichtung fließenden Hauptstrom erzeugt. Der sich ergebende Drall DR hat eine Rotationsachse, die entlang der angenommenen Strömungskörper-Tiefenrichtung S-T gerichtet ist.

Bei der in der Figur 3 dargestellte Ausblasphase erzeugt die Strömungserzeugungs-Vorrichtung eine Strömung, die von der Aktuatorkammer in die Vertiefung 20 strömt und in der Folge die Ausbildung des vorgenannten Dralls DR unterstützt, wie aus dem Vergleich der Figuren 2 und 3 hervorgeht. Dabei wird Fluid in Strahlrichtung S-Out zwischen Wandungen 13a und 13b zu den Randbereichen 23 und 24 geblasen. Aufgrund der oben beschriebenen geometrischen Asymmetrie des strukturellen Aufbaus der Anordnung 8 aus Vertiefung 20 und Durchlass 10, wird die Strömung von der Seitenwand 21 a zu der Begrenzungswand 11 gestärkt. Somit entsteht insgesamt eine Sekundärströmung, die dazu benutzt werden kann, den Bereich der Hauptströmung der in der Nähe der Strömungskonturfläche 3 verläuft mit energiereichem Fluid, welches aus dem Durchlass 10 heraustritt, zu versorgen. Durch Induktion kann auch energiereiches Fluid aus oberflächefernen Schichten in die Strömungsschichten, die nahe an der Strömungskonturfläche 3 vorbeiströmen, überführt werden.

Die mit Bezug zu den Figuren 2 und 3 beschriebenen Ansaug- und Ausblasphasen werden durch entsprechende Betätigung der Strömungserzeugungs-Vorrichtung zyklisch wiederholt. Wenn eine Gruppe, also eine Abfolge A1 oder Reihe A2 mehrerer Anordnungen 8 vorgesehen sind, ist nach einem Ausführungsbeispiel der Erfindung jede Anordnung an jeweils eine separate Einsaug- und Ausblasvorrichtung mit jeweils einem Aktuatorraum angekloppelt, so dass an jeder Anordnung 8 zeitlich individuell ein Wirbel oder Drall DR erzeugt werden kann. Wenn bei diesem Ausführungsbeispiel für jede Anordnungen 8 eine separate Kammer vorgesehen ist, in der jeweils ein Strömungserzeugungsmittel angebracht ist, kann vorgesehen sein, dass Ansaug- und Ausblasströmungen durch diese Anordnungen 8 im Gleichtakt oder in einer vorbestimmten Verzögerung zueinander erfolgen. Damit kann der beabsichtigte Sekundärströmungseffekt maximiert werden. Auch kann vorgesehen sein, dass die einzelnen Aktautoren so getaktet werden, dass keine Lücken oder wirbelfreies Feld auf einem bestimmten Bereich entsteht, wobei auch die Laufzeit der Strömung zur jeweils benachbarten Anordnung 8 oder Vertiefung 20 berücksichtigt wird.

Alternativ kann vorgesehen sein, dass mehrere Anordnungen 8 hintereinander angeordnet sind und dabei diese Anordnungen 8 entweder mit einer gemeinsamen Kammer verbunden sind oder jeweils einzeln mit einer separaten Kammer in Verbindung stehen. Wenn eine gemeinsame Kammer vorgesehen ist, werden durch alle Anordnungen 8 gleichzeitig über ein in dieser Kammer vorgesehenes Strömungserzeugungsmittel Fluid angesaugt oder ausgeblasen.

Bei einer Anströmung des Strömungskörpers in der Richtung S und einem Ansaugen von Fluid durch den Durchlass 10 mittels einer Einsaug- und Ausblasvorrichtung oder eines Aktuators bildet sich - aufgrund des im Bereich der Mündung 10a herrschenden Unterdrucks - die Strömung S1 aus, die gegen die Begrenzungswand 11 prallt und nach unten in Richtung zur Einmündung 10a und den Kanal 13 abgelenkt wird. Die Sekundärströmung S2, die sich an der in Bezug auf den Durchlass 10 der Vertiefung 20 gegenüber liegenden Seite der Strömungskonturfläche 3 ausbildet, gelangt nicht in die Vertiefung und strömt nicht in Richtung zur Mündung 10a, wenn sich der Drall DR ausgebildet hat (Figur 2). Zusätzlich kann der Randbereich 24 als Ecke ausgeführt sein, die eine Ablösung der Sekundärströmung S2 an dem Randbereich 24 bewirkt und gegebenenfalls eine Auflösung derselben. Die Ausbildung des Randbereichs mit einer Kantenlinie hat den Vorteil, dass diese die Sekundärströmung S2 daran hindert in den Kanal 13 zu kommen.

In der Ausblasphase (Figuren 3 und 5) strömt das aus dem Durchlass 10 austretende Fluid vom Inneren des Strömungskörpers gesehen nach außen. Dabei wird das in der Vertiefung 20 befindliche Fluid mitgerissen (entrainment), so dass sich bei einem Abwechseln von Ansaugphase und Ausblasphase ein asymmetrischer Strömungszustand einstellt (Figuren 3 und 5).

In der Ansaugphase wird also das von der Umströmung der Strömungsoberfläche kommende Fluid in die Vertiefung gelenkt und von der Begrenzungswand in den Durchlass umgelenkt. Die von der Strömungskonturfläche auf der an der Begrenzungswand liegenden Seite kommende Sekundärströmung S2 kann sich dabei oberhalb der Vertiefung auflösen. Bei einer entsprechenden Gestaltung des Randbereichs oder Eckbereichs 24 wird die von der Strömungskonturfläche auf der an der Begrenzungswand liegenden Seite kommende Sekundärströmung S2 daran gehindert, in die Vertiefung 21 und den Durchlass 13 zu strömen. Dabei wirkt der Randbereich oder Eckbereich 24 als Ablösekante oder Abreißkante für diese Sekundärströmung. In der Ausblasphase tritt Fluid aus dem Durchlass aus. Dies führt zum Nachströmen oder Mitreißen des in der Vertiefung befindlichen Fluids und der von der Strömungskonturfläche auf der an der Begrenzungswand 11 liegenden Seite kommende Sekundärströmung S4. In der Abfolge mehrerer Zyklen von Einsaugphasen und Ausblasphasen addieren sich die Strömungen zu einem asymmetrischen Strömungszustand und somit einem Drall DR oberhalb der Vertiefung 21, der wegen der zyklischen Abfolge stabil ist.

Das Vorliegen des asymmetrischen Strömungszustands kann auf vorteilhafte Weise durch eine entsprechende Gestaltung des Randbereichs oder Eckbereichs 24 der Mündung 10a unterstützt werden: Der Randbereich oder Eckbereich 24 kann als Abreißkante 24 gestaltet sein, in dem diese eine scharfe Kante, d.h. eine Kantenlinie aufweist.

Der erfindungsgemäße Strömungskörper mit zumindest einer Anordnung aus Durchlass und Vertiefung kann bei einem andern Ausführungsbeispiel auch bei der Kraftstoff-Einspritzung eines Verbrennungsmotors verwendet werden, mit dem ein Drall erzeugt wird, der die Verteilung des Kraftstoffes im Zylinder verbessert, so dass der Wirkungsgrad des Verbrennungsmotors mit dieser Maßnahme optimiert werden kann. Die Anordnung 8 ist dabei in der Einströmungsrichtung des Fluids in den Zylinder gesehen an der Stelle angeordnet, an der der Kraftstoff in den Zylinder eingespritzt wird. Der Durchlass 10 ist dabei der Durchlass für den Kraftstoff in den Verbrennungsraum.

## Patentansprüche

1. Strömungskörper (1) mit einer Strömungskörperoberfläche (2), die eine zur Umströmung durch ein Fluid vorgesehene Strömungskonturfläche (3) ausbildet, und mit zumindest einer Strömungsbeeinflussungs-Vorrichtung zur Beeinflussung der Strömung des die Strömungsoberfläche (2) umströmenden Fluids,
**dadurch gekennzeichnet, dass** die Strömungsbeeinflussungs-Vorrichtung (7) jeweils aufweist:
einen entlang der Strömungskörper-Dickenrichtung (S-D) verlaufenden Durchlass (10) zur Verbindung des die Strömungsoberfläche (2) umströmenden Fluids mit einem im Strömungskörper (1) angeordneten Aktuatorraum einer Einsaug- und Ausblasvorrichtung,
ein in der Strömungskörper-Tiefenrichtung (S-T) gesehen neben dem Durchlass (10) angeordneter und sich entlang der Strömungskörper-Spannweitenrichtung (S-SW) erstreckender Vertiefungsabschnitt (21),
wobei der Vertiefungsabschnitt (21) an einem Strömungsbeeinflussungsbereich innerhalb der Strömungskonturfläche (3) der Strömungsoberfläche (2) ausgebildet ist, so dass eine Begrenzungswand (11) mit dem Vertiefungsabschnitt (21) eine Vertiefung (20) bildet,
wobei die Begrenzungswand (11) in der Strömungskörper-Spannweitenrichtung (S-SW) gesehen und in Bezug auf den Durchlass (10) dem Vertiefungsabschnitt (21) gegenüber liegt,
so dass bei einem periodisch einander abwechselnden Ein- und Ausblasen von Fluid durch den Durchlass (10) mittels der Einsaug- und Ausblasvorrichtung in der Strömung des die Strömungsoberfläche (2) umströmenden Fluids ein Drall (DR) erzeugt werden kann, dessen Rotationsachse entlang der angenommenen Strömungskörper-Tiefenrichtung (S-T) gerichtet ist.

2. Strömungskörper nach Anspruch 1, **dadurch gekennzeichnet, dass** der Übergangsbereich zwischen der Begrenzungswand (11) und der Strömungskonturfläche (3) eine Kantenlinie aufweist.

3. Strömungskörper nach Anspruch 1 oder 2, **dadurch gekennzeichnet, dass** der Vertiefungsabschnitt (21) der Strömungsoberfläche (2) in der Strömungskörper-Spannweitenrichtung (S-SW) gesehen winklig zu der neben der Vertiefung (20) gelegenen Strömungskonturfläche (2a) verläuft, so dass der Oberflächenabschnitt (21) von der Strömungskonturfläche (2a) aus gesehen von dieser zur Einmündung (10a) des Durchlasses (10) hin rampenförmig abfällt.

4. Strömungskörper (1) nach einem der vorangehenden Ansprüche, **dadurch gekennzeichnet, dass** auf der Strömungskörperoberfläche (2) eine Mehrzahl von Anordnungen aus jeweils einem Durchlass (10) und einer Vertiefung (20) angeordnet ist, von denen zumindest mehrere dieser Anordnungen mit einem Aktuatorraum einer Einsaug- und Ausblasvorrichtung in Strömungsaustausch stehen.

5. Strömungskörper (1) nach einem der vorangehenden Ansprüche, **dadurch gekennzeichnet, dass** die Anordnungen (8) aus jeweils einem Durchlass (10) und einer Vertiefung (20) in der Strömungskörper-Tiefenrichtung (S-T) gesehen hintereinander und voneinander beanstandet angeordnet sind, wobei die Kombinationen einer Vertiefung (20) und eines Durchlasses (10) in der Strömungskörper-Spannweitenrichtung (S-SW) gesehen in der gleichen Orientierung angeordnet sind.

6. Strömungskörper (1) nach einem der vorangehenden Ansprüche, **dadurch gekennzeichnet, dass** die Anordnungen (8) aus jeweils einem Durchlass (10) und einer Vertiefung in der Strömungskörper-Spannweitenrichtung (S-SW) gesehen nebeneinander und voneinander beanstandet angeordnet sind, wobei die Kombinationen einer Vertiefung (20) und eines Durchlasses (10) in der Strömungskörper-Spannweitenrichtung (S-SW) gesehen jeweils abwechselnd in zueinander entgegengesetzter Orientierung angeordnet sind.

7. Strömungskörper (1) nach einem der vorangehenden Ansprüche, **dadurch gekennzeichnet, dass** die Einsaug- und Ausblasvorrichtung aus einem den Aktuatorraum derselben zumindest teilweise umgrenzenden Membran-Aktuator besteht, der derart ausgeführt ist, dass durch entsprechende Betätigung des Membran-Aktuators das Volumen des Aktuatorraums vergrößert und verkleinert werden kann, wobei durch die Verkleinerung des Aktuatorraumvolumens Fluid durch den Durchlass ausgeblasen und durch die Vergrößerung des Aktuatorraumvolumens Fluid durch den Durchlass eingesaugt wird.

8. Strömungskörper (1) nach einem der vorangehenden Ansprüche 1-6, **dadurch gekennzeichnet, dass** die Einsaug- und Ausblasvorrichtung eine Strömungserzeugungs-Vorrichtung aufweist, die derart in Wirkverbindung mit dem Aktuatorraum der Einsaug- und Ausblasvorrichtung steht, dass bei einer entsprechenden Betätigung der Strömungserzeugungs-Vorrichtung periodisch abwechselnd Fluid durch den Durchlass ausgeblasen und durch den Durchlass eingesaugt wird.

9. Strömungskörper (1) nach dem vorangehenden Anspruch, **dadurch gekennzeichnet, dass** die Strömungserzeugungs-Vorrichtung eine Kreiskolbenpumpe und/oder eine intermittierend arbeitende Kolbenpumpe aufweist.

10. Stellklappe oder Hauptflügel oder Flosse eines Flugzeugs, die nach einem der vorhergehenden Ansprüche gebildet ist.

11. Stellklappe oder Hauptflügel oder Flosse eines Flugzeugs nach dem Anspruch 10, **dadurch gekennzeichnet, dass** eine Mehrzahl von Anordnungen (8) aus jeweils einem Durchlass (10) und einer Vertiefung in der Strömungskörper-Tiefenrichtung (S-T) gesehen in der hinteren Hälfte der Strömungsoberfläche (2) angeordnet sind.

12. Strukturbauteil für ein Flugzeug, ein bodengebundenes Fahrzeug oder ein Wasserfahrzeug mit einem Strömungskörper nach einem der Ansprüche 1 bis 9.

## Claims

1. Flow body (1) with a flow body surface (2) forming a flow contour surface (3) for a fluid to flow about, and with at least one flow-influencing device for influencing the flow of the fluid flowing about the flow surface (2),
**characterized in that** the flow-influencing device (7) respectively comprises:
a passage (10) extending along the thickness direction (S-D) of the flow body for connecting the fluid flowing about the flow suface (2) with an actuator space of an ingestion and purging device arranged in the flow body (1),
an indentation section (21) arranged next to the passage (10) in the chord direction (S-T) of the flow body and extending along the span direction (S-SW) of the flow body,
wherein the indentation section (21) is formed in a flow influencing area inside the flow contour surface (3) of the flow surface (2) such that a boundary wall (11) forms a recess (20) with the indentation section (21),
wherein the boundary wall (11) is located opposite the indentation section (21) in the span direction (S-SW) of the flow body and relative to the passage (10),
such that upon alternate periodic ingesting and purging of fluid through the passage (10) using the ingestion and purging device in the fluid flowing about the flow surface (2) a swirl (DR) having a rotational axis directed along the assumed chord direction (S-T) of the flow body may be created.

2. Flow body according to claim 1, **characterized in that** the transition area between the boundary wall (11) and the flow contour surface (3) has an edge line.

3. Flow body according to claim 1 or 2, **characterized in that** the indentation section (21) of the flow surface (2) extends angled with respect to the flow contour surface (2) next to the flow contour surface (2a) when viewed in the span direction (S-SW) of the flow body, such that the surface section (21) slopes towards an opening (10a) of the passage (10) in the form of the ramp from the flow contour surface (2a) when viewed from the latter.

4. Flow body (1) according to any of the preceding claims, **characterized in that** a plurality of arrangements each comprising a passage (10) and a recess (20) is arranged on the flow body surface (2), wherein at least several of said arrangements are in flow exchange with an actuator space of a ingestion and purging device.

5. Flow body (1) according to any of the preceding claims, **characterized in that** the arrangements (8) each comprising a passage (10) and a recess (20) are arranged behind one another and spaced from one another when viewed in the chord direction (S-T) of the flow body, wherein the combinations of a recess (20) and a passage (10) are arranged in the same orientation when viewed in the span direction (S-SW) of the flow body.

6. Flow body (1) according to any of the preceding claims, **characterized in that** the arrangements (8) each comprising a passage (10) and a recess are arranged adjacent to each other and spaced apart from each other when viewed in the span direction (S-SW) of the flow body, wherein the combinations of a recess (20) and passage (10) are each alternately oriented oppositely relative to each other when viewed in the span direction (S-SW) of the flow body.

7. Flow body (1) according to any of the preceding claims, **characterized in that** the ingestion and purging device consists of a membrane actuator at least partially delimiting the actuator space of the latter, which is formed in such a way that the volume of the actuator space can be increased and decreased by correspondingly operating the membrane actuator, wherein decreasing the actuator space volume purges fluid through the passage, and increasing the actuator space volume ingests fluid through the passage.

8. Flow body (1) according to any of claims 1-6, **characterized in that** the ingestion and purging device comprises a flow-generating device that is operatively connected with the actuator space of the ingestion and purging device in such a way that fluid is alternately and periodically purged through the passage and ingested through the passage when the flow-generating device is correspondingly operated.

9. Flow body (1) according to any of the preceding claims, **characterized in that** the flow-generating device comprises a rotary piston pump and/or an intermittently operating piston pump.

10. Regulating flap or main wing or fin of an aircraft formed according to any of the preceding claims.

11. Regulating flap or main wing or fin of an aircraft according to claim 10, **characterized in that** a plurality of arrangements (8) each comprising a passage (10) and recess (20) are arranged in the rear half of the flow surface (2) when viewed in the chord direction (S-T) of the flow body.

12. Structural component for an aircraft, a land-bound vehicle or a water craft with a flow body according to any of claims 1 to 9.

## Revendications

1. Corps d'écoulement (1) ayant une surface du corps d'écoulement (2) qui forme une surface de profil d'écoulement (3) prévu pour l'écoulement par un fluide et ayant au moins un dispositif d'influence du courant pour influencer le courant du fluide s'écoulant sur la surface d'écoulement(2),
**caractérisé en ce que** le dispositif d'influence du courant (7) présente:
un passage (10) s'étendant dans le sens de l'épaisseur du corps d'écoulement (S-D), servant à relier le fluide s'écoulant sur la surface d'écoulement (2) avec un compartiment d'actionneur disposé dans le corps d'écoulement(1)d'un dispositif d'aspiration et d'éjection,
une partie d'évidement (21) disposée dans le sens de la profondeur du corps d'écoulement (S-T) à côté du passage (10) et s'étendant dans le sens transversal du corps d'écoulement (S-SW),
dans lequel la partie d'évidement (21) est formée sur une zone d'influence de courant au sein de la surface du profil d'écoulement (3) de la surface d'écoulement (2), si bien qu'une paroi de délimitation (11) forme un creux (20) avec la partie d'évidement (21),
dans lequel la paroi de délimitation (11) dans le sens transversal du corps d'écoulement (S-SW) et en rapport avec le passage (10) fait face à la partie d'évidement (21),
si bien qu'en cas d'aspiration et d'éjection de fluide en alternance périodique à travers le passage (10) au moyen du dispositif d'aspiration et d'éjection, il est possible de générer un tourbillon (DR) dans l'écoulement du fluide s'écoulant sur la surface d'écoulement (2), fluide dont l'axe de rotation est orienté dans le sens de la profondeur du corps d'écoulement adopté (S-T).

2. Corps d'écoulement selon la revendication 1, **caractérisé en ce que** la zone de passage entre la paroi de délimitation (11) et la surface du profil d'écoulement (3) présente une ligne de bord.

3. Corps d'écoulement selon la revendication 1 ou 2, **caractérisé en ce que** la partie d'évidement (21) de la surface d'écoulement (2) dans le sens transversal du corps d'écoulement (S-SW) forme un angle par rapport à la surface de profil de courant (2a) située à côté du creux (20), si bien que la partie de la surface (21) depuis la surface de profil d'écoulement (2a) chute de celle-ci jusqu'à l'embouchure (10a) du passage (10) sous forme de rampe.

4. Corps d'écoulement (1) selon l'une quelconque des revendications précédentes, **caractérisé en ce que** sur la surface du profil d'écoulement (2) une majorité de dispositions composées d'un passage (10) et d'un creux (20) est disposée, parmi celles-ci au moins plusieurs de ces dispositions sont en échange d'écoulement avec un compartiment d'actionneur d'un dispositif d'aspiration et d'éjection.

5. Corps d'écoulement (1) selon l'une quelconque des revendications précédentes, **caractérisé en ce que** les dispositions (8) se composant d'un passage (10) et d'un creux (20) dans le sens de la profondeur du corps d'écoulement (S-T) sont disposées les unes à la suite des autres et espacées les unes des autres, dans lequel les combinaisons d'un creux (20) et d'un passage (10) dans le sens transversal du corps d'écoulement (S- SW) sont disposées dans la même orientation.

6. Corps d'écoulement (1) selon l'une quelconque des revendications précédentes, **caractérisé en ce que** les dispositions (8) se composant d'un passage (10) et d'un creux dans le sens transversal du corps d'écoulement (S-SW) sont disposées les unes à côté des autres et espacées les unes des autres, dans lequel les combinaisons d'un creux (20) et d'un passage (10) dans le sens transversal du corps d'écoulement (S- SW) sont disposées en alternance dans une orientation mutuellement opposée.

7. Corps d'écoulement (1) selon l'une quelconque des revendications précédentes, **caractérisé en ce que** le dispositif d'aspiration et d'éjection se compose d'un actionneur de membrane entourant au moins partiellement le compartiment d'actionneur, actionneur conçu de manière à ce qu'en actionnant l'actionneur de membrane, le volume du compartiment d'actionneur puisse être augmenté et diminué, dans lequel en diminuant le volume de l'actionneur, du fluide est éjecté par le passage et en augmentant le volume du compartiment d'actionneur, du fluide est aspiré par le passage.

8. Corps d'écoulement (1) selon l'une quelconque des revendications précédentes 1-6, **caractérisé en ce que** le dispositif d'aspiration et d'éjection présente un dispositif de génération d'écoulement qui se trouve en liaison active avec le compartiment d'actionneur du dispositif d'aspiration et d'éjection, de manière à ce qu'en cas d'actionnement correspondant du dispositif de génération d'écoulement, du fluide soit en alternance périodique éjecté par le passage et aspiré par le passage.

9. Corps d'écoulement (1) selon la revendication précédente, **caractérisé en ce que** le dispositif de génération d'écoulement présente une pompe à piston tournant et/ou une pompe à piston travaillant par intermittence.

10. Vanne papillon ou aile principale ou stabilisateur d'un avion qui est formé selon l'une quelconque des revendications précédentes.

11. Vanne papillon ou aile principale ou stabilisateur d'un avion selon la revendication 10, **caractérisé en ce qu'**une majorité de dispositions (8) se composant d'un passage (10) et d'un creux dans le sens de la profondeur du corps d'écoulement (S-T) sont disposées dans la moitié arrière de la surface d'écoulement (2).

12. Pièce structurelles pour un aéronef, un véhicule au sol ou une embarcation avec un corps d'écoulement selon l'une quelconque des revendications 1 à 9.
